# EUROPÄISCHE PATENTANMELDUNG

(11) **EP 3 838 507 A1**
(43) Veröffentlichungstag der Anmeldung: **23.06.2021**
(21) Anmeldenummer: 20210698.5
(22) Anmeldetag: 30.11.2020
(51) Int. Cl.: B25J 15/00, B25J 15/06, B25J 19/00

(54) **PRÜFVORRICHTUNG SOWIE VERFAHREN ZUR ZUSTANDSKONTROLLE VON VAKUUMSAUGERN EINER GREIFEINRICHTUNG**

(30) Priorität: 17.12.2019 DE 102019134764
(71) Anmelder: TRUMPF Werkzeugmaschinen GmbH + Co. KG, 71254 Ditzingen (DE)
(72) Erfinder: Nagel, Philipp, 71144 Steinenbronn (DE); Deiss, Magnus, 70372 Stuttgart (DE)
(74) Vertreter: Mammel und Maser

(57) **Zusammenfassung**

Die Erfindung betrifft eine Prüfvorrichtung sowie ein Verfahren für eine Zustandskontrolle von Vakuumsaugern (35) einer Greifeinrichtung (27), mit mehreren Prüfeinrichtungen (52), die in zumindest einem Prüffeld (53) zur Außenseite einer Trägeranordnung (51) ausgerichtet sind und in einer XY-Ebene der Trägeranordnung (51) nebeneinander liegen und zueinander beabstandet sind, sodass jeweils ein Vakuumsauger (35) zur Prüfeinrichtung (52) positionierbar ist, wobei die Trägeranordnung (51) zumindest zwei Ausrichtelemente (54) aufweist, die zur lagerichtigen Ausrichtung der Greifvorrichtung (27) in der XY-Ebene zur Trägeranordnung (51) ausgebildet sind, sodass die jeweiligen Vakuumsauger (35) der Greifeinrichtung (27) zu den jeweiligen Prüfeinrichtungen (52) der Trägeranordnung (51) ausgerichtet sind. (Hierzu Figur 4)

## Beschreibung

Die Erfindung betrifft eine Prüfvorrichtung für eine Zustandskontrolle von Vakuumsaugern einer Greifeinrichtung sowie ein Verfahren zur Durchführung der Zustandskontrolle von Vakuumsaugern einer Greifeinrichtung mit einer solchen Prüfvorrichtung.

Aus der EP 3 375 576 A1 sind ein Verfahren und eine Vorrichtung zur Zustandskontrolle von Vakuumsaugern einer Greifeinrichtung bekannt. Die Greifeinrichtung umfasst Vakuumsauger mit Saugelementen, die zum Greifen von Werkstücken mit Vakuum beaufschlagt werden. Dabei wird jedes am Werkstück angreifende Saugelement oder eine Gruppe von Saugelementen mit zumindest einem Ventil der Greifeinrichtung angesteuert. Zur Überprüfung der einzelnen Saugelemente der Vakuumsauger ist eine Prüfvorrichtung vorgesehen, welche mehrere Prüfeinrichtungen umfasst, wobei jede Prüfeinrichtung jedem Vakuumsauger bei der Überprüfung gegenüberliegend angeordnet wird. Zum Prüfen der Saugelemente werden diese mit der jeweiligen Prüfeinrichtung der Prüfvorrichtung in Kontakt gebracht. Darauffolgend wird die jeweilige Prüfeinrichtung angesteuert, um die Funktion der Saugelemente zu überprüfen.

Aus der DE 20 2013 101 438 U1 ist eine Leiterplattenprüfvorrichtung bekannt. Diese Leiterplattenprüfvorrichtung umfasst ein Steuergehäuse, an welchem ein Prüfgehäuse vorgesehen ist. An einem Boden des Prüfgehäuses sind Haltestifte vorgesehen, an denen die Leiterplatte befestigbar ist, um eine Prüfung durchzuführen. Dazu wird der Gehäusedeckel geschlossen. Nach dem Öffnen des Gehäusedeckels nehmen Haltestifte am Deckel die Leiterplatte auf, um darauffolgend ein einfaches Entnehmen der Leiterplatte zu ermöglichen.

Aus der DE 10 2013 113 580 A1 ist ein Verfahren zum Positionieren eines Trägers mit einer Vielzahl elektronischer Bauteile in einer Einrichtung zum Prüfen der elektronischen Bauteile bekannt. Der Träger wird mit einer Pick-and-Place-Einheit bereitgestellt. Dabei werden mehrere Markierungen auf einer Seite des Trägers mit wenigstens einer Kamera erfasst, und die Position der Markierungen wird in Bezug auf die bekannte Position eines Nestes zur Aufnahme des Trägers ermittelt. Darauffolgend wird das Nest in eine Position exakt gegenüber dem Träger verfahren und der Träger an das Nest übergeben. Darauffolgend werden mehrere weitere Markierungen auf der anderen Seite des Trägers mit wenigstens einer weiteren Kamera erfasst, und die Position der weiteren Markierungen wird in Bezug auf die festgelegte Position eines Prüfsockels ermittelt. Anschließend wird das Nest in eine exakte Position gegenüber dem Prüfsockel positioniert, und der Träger wird gegen den Prüfsockel gedrückt.

Der Erfindung liegt die Aufgabe zugrunde, eine Prüfvorrichtung für eine Zustandskontrolle von Vakuumsaugern einer Greifvorrichtung sowie ein Verfahren zur Zustandskontrolle von Vakuumsaugern einer Greifvorrichtung mit einer solchen Prüfvorrichtung vorzuschlagen, durch welche in einfacher Weise eine exakte Positionierung der Greifvorrichtung zur Prüfvorrichtung ermöglicht wird.

Diese Aufgabe wird durch eine Prüfvorrichtung für eine Zustandskontrolle von Vakuumsaugern einer Greifvorrichtung gelöst, bei welcher eine Trägeranordnung, die zumindest in einem Prüffeld zu einer Außenseite ausgerichtete Prüfeinrichtungen umfasst, die in einer in XY-Richtung sich erstreckenden Ebene nebeneinander liegen und zueinander beabstandet sind, zumindest zwei Ausrichtelemente aufweist, die zur lagerichtigen Ausrichtung der Greifvorrichtung in der XY-Ebene zur Trägeranordnung ausgebildet sind, sodass der jeweilige Vakuumsauger der Greifeinrichtung zur jeweiligen Prüfeinrichtung ausgerichtet ist. Diese zumindest zwei Ausrichtelemente ermöglichen eine hohe Positioniergenauigkeit der Greifvorrichtung zur Prüfvorrichtung, bevor die Greifeinrichtung auf die Prüfeinrichtungen aufgesetzt wird. Diese hohe Positioniergenauigkeit wird sowohl bei einer manuellen als auch bei einer automatischen Positionierung der Greifvorrichtung zur Prüfvorrichtung ermöglicht. Dadurch kann eine hohe Prozesssicherheit erzielt werden. Durch die aktive und exakte Zuordnung des jeweiligen Vakuumsaugers der Greifeinrichtung zur jeweiligen Prüfeinrichtung kann die darauffolgende Prüfung gesichert durchgeführt werden, da eine Fehlerquelle bei einer mangelnden lagerichtigen Ausrichtung der Greifvorrichtung zur Prüfvorrichtung vor Beginn der Prüfung ausgeschlossen werden kann.

Bevorzugt ist die Trägeranordnung rechtwinklig oder quadratisch ausgebildet, und zumindest zwei Ausrichtelemente sind beabstandet an einer ersten Seitenkante der Trägeranordnung vorgesehen, und zumindest ein Ausrichtelement ist an einer zur ersten Seitenkante benachbarten Seitenkante der Trägeranordnung vorgesehen. Dadurch wird eine Drei--punktanlage der Greifvorrichtung zu den Ausrichtelementen der Trägeranordnung ermöglicht. Eine solche Dreipunktanlage ermöglicht ein einfaches und definiertes Positionieren der Greifvorrichtung zu den Ausricht-elementen. Daraus resultierend kann eine sichere Ausrichtung der Trägeranordnung zur Greifvorrichtung in der XY-Ebene gegeben sein. Auch kann ein langes Ausrichtelement an einer ersten Seitenkante und zumindest ein kurzes Ausrichtelement an einer zur ersten Seitenkante benachbarten Seitenkante der Trägeranordnung Vorgesehen sein, wobei das lange Ausrichtelement vorzugsweise wenigstens die 1,5-fache Länge des kurzen Ausrichtelements aufweist.

Vorteilhafterweise sind die zumindest zwei Ausrichtelemente jeweils als ein Anschlag, insbesondere eine Anschlagfläche, ausgebildet, die sich gegenüber der XY-Ebene der Trägeranordnung in Z-Richtung erstrecken. Dadurch ist eine konstruktiv einfache Ausgestaltung eines solchen mechanischen Anschlages für die Greifvorrichtung gegeben. Als Ausrichtelemente sind auch andere Formen wie beispielsweise Zylinder oder Prismen denkbar.

Die zumindest zwei Ausrichtelemente können gemäß einer ersten Ausführungsform eine Anschlagfläche als Anschlag aufweisen, die senkrecht zur XY-Ebene der Trägeranordnung ausgebildet ist. Alternativ können diese auch in Z-Richtung gesehen eine Einführschräge bilden. Auch kann das Anschlagelement eine Einführschräge aufweisen, welche in die senkrecht stehende Anschlagfläche übergeht. Dadurch können ein vereinfachtes Anfahren der Greifvorrichtung und eine Positionierung der Greifvorrichtung zur Trägeranordnung ermöglicht sein.

Eine alternative Ausführungsform zur Ausrichtung der Greifvorrichtung zur Trägeranordnung sieht an jeder Seitenkante der Trägeranordnung zumindest ein Ausrichtelement vor oder die an jeder Seitenkante der Trägeranordnung vorgesehenen Ausrichtelemente bilden einen umlaufenden Ausrichtrahmen, und die Ausrichtelemente oder der Ausrichtrahmen weisen einen Anschlag auf, welche für eine selbstzentrierende Anordnung der Greifvorrichtung zum Prüffeld der Trägeranordnung ausgebildet sind. Diese alternative Anordnung ermöglicht ein Zuführen der Vakuumsauger der Greifvorrichtung entlang einer Z-Achse auf die Trägeranordnung zu, wobei darauffolgend durch diese Anschläge ein selbständiges Ausrichten der Vakuumsauger der Greifvorrichtung und/oder der Trägeranordnung zueinander in der XY-Ebene ermöglicht wird.

Bei der Prüfvorrichtung ist bevorzugt die Trägeranordnung in einem Gehäuse mit elastisch nachgiebigen Elementen zu einem Gehäuseboden und/oder zumindest zu einer Gehäusewand schwimmend gelagert. Diese Anordnung weist den Vorteil auf, dass die Trägeranordnung während dem Positionieren der Greifvorrichtung zur Prüfvorrichtung in der Ausrichtung an die Vakuumsauger der Greifvorrichtung angepasst werden kann, um die Positioniergenauigkeit für die darauffolgende Prüfung zu erhöhen.

Vorteilhafterweise sind die elastisch nachgiebigen Elemente am Gehäuseboden des Gehäuses in Z-Richtung stehend ausgerichtet. Dadurch wird in einfacher Weise eine Verfahrbewegung in der XY-Ebene als auch ein Ausgleich in die Lage der Trägeranordnung um eine Drehachse entlang der Z-Richtung ermöglicht. Zudem kann entlang der Z-Achse ein Anpressdruck zwischen der Greifeinrichtung und der Trägeranordnung angesteuert werden.

Alternativ können die nachgiebig elastischen Elemente an den seitlichen Gehäusewänden positioniert sein und sich in der XY-Ebene erstrecken. Vorzugsweise kann zwischen dem Gehäuseboden und der Trägeranordnung zumindest ein elastisches, nachgiebiges oder ein bewegliches Führungselement vorgesehen sein. Dadurch kann ebenfalls eine Ausrichtung der Trägeranordnung zu den Vakuumsaugern der Greifvorrichtung ermöglicht sein.

Bei der schwimmenden Lagerung der Trägeranordnung im Gehäuse ermöglichen die elastisch nachgiebigen Elemente eine Auslenkung der Trägeranordnung in der XY-Ebene, die größer als die Auslenkung in Z-Richtung ist. Dadurch kann zum einen eine hohe Positioniergenauigkeit der Trägeranordnung durch die Ausrichtung zu den Vakuumsaugern der Greifvorrichtung ermöglicht sein und zum anderen ein ausreichend hoher Anpressdruck zwischen der Greifvorrichtung und der Trägeranordnung gebildet werden, um darauffolgend die Prüfung durchzuführen.

Eine weitere vorteilhafte Ausgestaltung der Prüfvorrichtung sieht vor, dass das Gehäuse, welches die Trägeranordnung aufnimmt, einen Deckel aufweist, der vor dem Gebrauch der Prüfvorrichtung aufklappbar ist und vorzugsweise ein Angriffselement, insbesondere eine Lasche, zum Öffnen mittels einer Handhabungseinrichtung aufweist. Durch den Deckel am Gehäuse wird bei einem Nichtgebrauch der Prüfvorrichtung ein Verschmutzen der Trägeranordnung verhindert, wodurch eine längere Funktionsdauer gegeben ist.

Vorteilhafterweise sind in einer Schnittstelle zwischen dem Gehäuse und dem Deckel Abdichtelemente vorgesehen, insbesondere umlaufende Dichtungselemente. Diese verhindern ein Eindringen von beispielsweise Feuchtigkeit, Wasser, Fett und/oder Öl oder sonstigen Verschmutzungen, wie beispielsweise ein Schmauch oder Staub, der beim Laserschneiden oder Laserschmelzen entsteht.

Des Weiteren ist bevorzugt vorgesehen, dass mehrere Prüfeinrichtungen oder alle Prüfeinrichtungen der Prüfvorrichtung in einem Rastermaß zueinander angeordnet sind, welches dem der Vakuumsauger, insbesondere den Saugelementen in einem Saugerfeld, entsprechen. Dadurch kann jeder Vakuumsauger bzw. jedes Saugelement geprüft werden.

Die der Erfindung zugrundeliegende Aufgabe wird des Weiteren durch ein Verfahren zur Zustandskontrolle von Vakuumsaugern einer Greifeinrichtung mit einer Prüfvorrichtung gelöst, bei der die Greifeinrichtung zu einer Trägeranordnung der Prüfvorrichtung, welche eine Vielzahl von Prüfeinrichtungen für den jeweiligen Vakuumsauger der Greifvorrichtung umfasst, verfahren wird und bei dem die Greifvorrichtung vor dem Aufsetzen von Saugelementen der Vakuumsauger auf die jeweiligen Prüfeinrichtung der Trägeranordnung zur Anlage an zumindest zwei Ausrichtelementen der Trägeranordnung verfahren wird und nach dem Ausrichten der Greifvorrichtung in der XY-Ebene zur Trägeranordnung die Vakuumsauger der Greifeinrichtung auf der Prüfeinrichtung aufgesetzt werden. Dadurch wird die Trägeranordnung mit den Prüfeinrichtungen und die Greifvorrichtung mit dem Vakuumsauger relativ zueinander lagerichtig ausgerichtet, bevor die Vakuumsauger der Greifeinrichtung zu den jeweiligen Prüfeinrichtungen für die nachfolgende Prüfung positioniert werden. Dadurch ist die Greifvorrichtung in ihrer Gesamtheit mit allen Vakuumsaugern lagerichtig zu den Prüfeinrichtungen ausgerichtet.

Des Weiteren wird bevorzugt die Trägeranordnung mit den Prüfeinrichtungen mit einem Gehäuse durch elastisch nachgiebige Elemente schwimmend gelagert aufgenommen. Dies ermöglicht in einfacher Weise eine positionsgenaue Ausrichtung der Trägeranordnung mit den jeweiligen Prüfvorrichtungen zu den Vakuumsaugern der Greifvorrichtung.

Des Weiteren wird bevorzugt das Gehäuse, in welchem die Trägeranordnung bereitgestellt wird, mit einem Deckel verschlossen und vor der Durchführung der Zustandskontrolle der Deckel geöffnet. Die Öffnung des Deckels kann durch einen Aktor wie beispielsweise einen fluidbeaufschlagten Zylinder oder Motor angesteuert werden. Alternativ kann eine Handhabungseinrichtung der Bearbeitungsmaschine vorzugsweise an einer Lasche oder weiteren Befestigungspunkten am Deckel angreifen, wodurch dieser geöffnet wird. Nach der Durchführung der Prüfung der Vakuumsauger der Greifeinrichtung kann der Deckel wieder geschlossen werden.

Des Weiteren wird bevorzugt die Greifeinrichtung nach der Ausrichtung der Vakuumsauger zur Trägeranordnung in der XY-Ebene auf die Trägeranordnung zugeführt und vorzugsweise mit einer vorbestimmten Andrückkraft zur Trägeranordnung positioniert. Dadurch kann sichergestellt sein, dass die darauffolgende Durchführung der Zustandskontrolle mittels den jeweiligen Prüfeinrichtungen unter gleichbleibenden Bedingungen durchgeführt wird. Insbesondere bei der Überprüfung der Haltekraft von Saugelementen der Vakuumsauger werden die Dichtheit und die Anlage der Saugelemente an der Trägeranordnung überprüft.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer Bearbeitungsmaschine und einer Handlingsvorrichtung mit einer einen Vakuumsauger aufweisenden Greifvorrichtung,
Figur 2 eine schematische Ansicht von unten auf eine Saugplatte der Greifvorrichtung mit Vakuumsauger in Figur 1,
Figur 3 eine perspektivische Ansicht auf eine Prüfvorrichtung mit einem geschlossenen Gehäuse,
Figur 4 eine perspektivische Ansicht auf die Prüfvorrichtung gemäß Figur 3 mit einem geöffneten Gehäuse,
Figur 5 eine schematische Schnittansicht entlang der Linie A-A in Figur 3,
Figur 6 eine schematische Schnittansicht entlang der Linie B-B in Figur 3,
Figur 7 eine schematische Ansicht auf eine alternative Ausführungsform zur Anordnung der Ausrichtelemente,
Figur 8 eine schematische Schnittansicht einer alternativen Ausführungsform zu Figur 3,
Figur 9 eine schematische Ansicht auf die alternative Ausführungsform gemäß Figur 8,
Figur 10 eine schematische Schnittansicht einer alternativen Ausführungsform zu Figur 3 und
Figur 11 eine schematische Ansicht auf die Ausführungsform gemäß Figur 10.

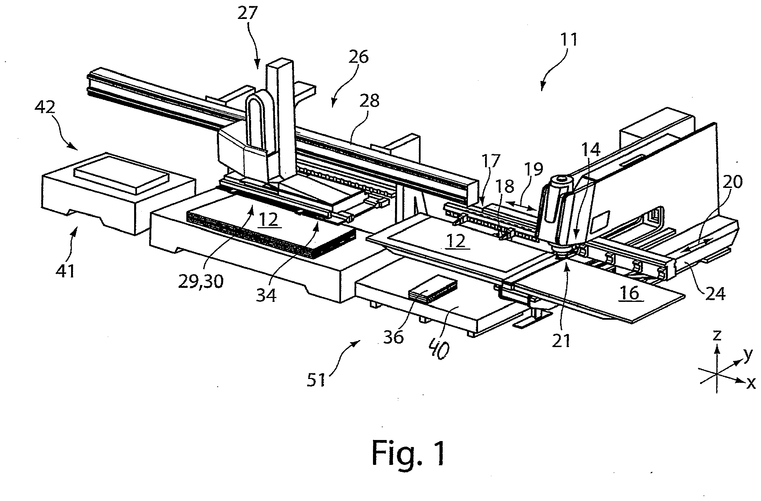

In Figur 1 ist perspektivisch eine Bearbeitungsmaschine 11 dargestellt, welche beispielsweise als Stanz-Maschine ausgebildet ist. Zur trennenden Bearbeitung eines plattenförmigen Werkstücks 12, beispielsweise in Form eines Bleches, ist vorzugsweise eine ortsfeste Bearbeitungseinrichtung 21 mit einem Stanzkopf 14 und mit einem nicht näher dargestellten Stanzstempel vorgesehen. Alternativ kann auch eine Laserbearbeitungsmaschine oder eine Laser-Stanz-Maschine eingesetzt werden, bei der benachbart zum Stanzkopf 14 ein Laserbearbeitungskopf vorgesehen ist. Das zu bearbeitende Werkstück 12 liegt während der Werkstückbearbeitung auf einer Werkstückauflage 16 auf. Das Werkstück 12 wird während der Bearbeitung mit einer Halteeinrichtung 17, welche vorzugsweise Klammern 18 umfasst, gehalten und kann gegenüber dem Stanzkopf 14 in der X-Richtung der Werkstückebene (X/Y-Ebene) mittels eines durch einen Pfeil angedeuteten konventionellen Linearantriebs 19 verfahren werden. In Y-Richtung der Werkstückebene kann das Werkstück 12 bewegt werden, indem die Werkstückauflage 16 zusammen mit der Halteeinrichtung 17 relativ zu einer Unterlage 24, auf welcher die Werkstückauflage 16 gelagert ist, mittels eines durch einen Pfeil angedeuteten herkömmlichen Linearantriebs 20 verfahren wird. Das Werkstück 12 lässt sich auf diese Weise in X- und Y-Richtung gegenüber dem Stanzkopf 14 verschieben, sodass der jeweils zu bearbeitende Bereich des Werkstücks 12 im Bearbeitungsbereich des Stanzkopfes 14 positioniert werden kann. Der Bearbeitungsbereich liegt zwischen dem Stanzkopf 14 und einer nicht näher dargestellten Stanzmatrize, die auswechselbar ist. Entsprechend kann in dem ortsfesten Bearbeitungsbereich des Laserbearbeitungskopfes bei einer Laser-Stanz-Maschine eine Laseroptik angeordnet sein.

Zur Werkstückauflage 16 der Bearbeitungsmaschine 11 ist an einer Stirnseite eine Handlingseinrichtung 26 vorgesehen, welche auch eine Greifeinrichtung 27 umfassen kann, die entlang zumindest einer Linearachse 28 von einer Be- und Entladeposition 29, 30 für das plattenförmige Material 12 in eine Entnahmeposition oder Warteposition verfahrbar ist, um ein bearbeitetes Werkstück 36 aufzunehmen und beispielsweise aus der Bearbeitungsmaschine 11 herauszuführen oder in einem Magazin 40 abzulegen.

Benachbart zur Be- und Entladestation 29, 30 kann eine Prüfstation 41 mit einer Prüfvorrichtung 42 für die Greifeinrichtung 27 vorgesehen sein. Die Handlingsvorrichtung 26 kann entlang der Linearachse 28 die Greifeinrichtung 27 in die Prüfstation 41 für eine Durchführung der Zustandskontrolle mit der Greifeinrichtung 27 verfahren.

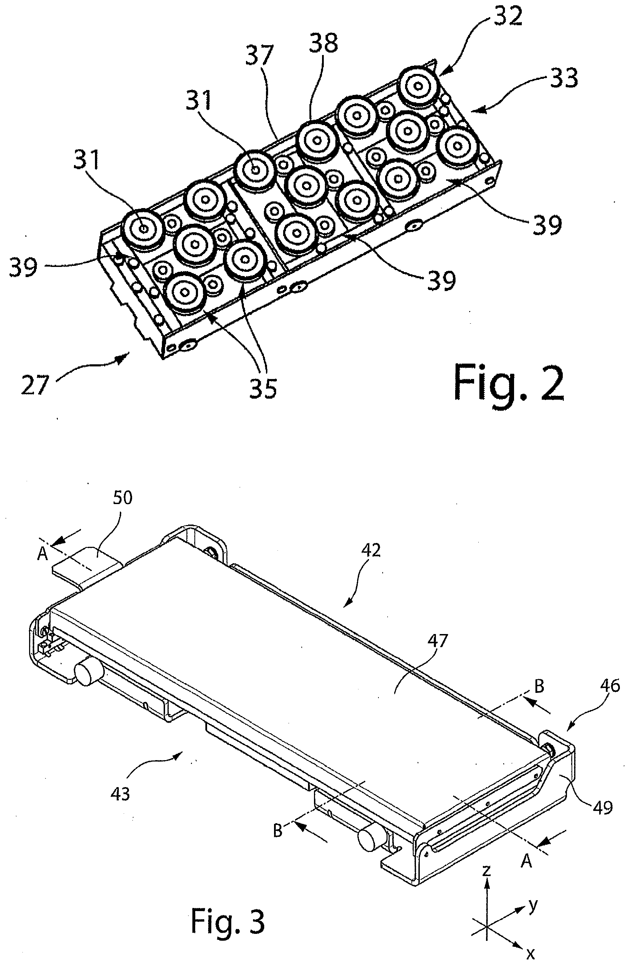

Die Greifeinrichtung 27 kann einen Saugrahmen 34 aufweisen, welcher eine oder mehrere Saugplatten 33 umfasst, wie diese in Figur 2 in einer Ansicht von unten dargestellt ist. An jeder Saugplatte 33 sind mehrere Vakuumsauger 35 vorgesehen. Jeder dieser Vakuumsauger 35 dient als Entnahmesauger. Die Vakuumsauger 35 bestehen gemäß einer ersten Ausführungsform aus einem Saugelement 31, welches gegenüber einer Außenseite 37 eines Gehäuses 38 der Saugplatte 33 hervorsteht und einem Saugelement 31 zugeordneten, jedoch innerhalb dem Gehäuse 38 liegenden Ventil. Alternativ kann der Vakuumsauger 35 aus einem Saugelement 31 bestehen, welches mit mehreren weiteren Saugelementen 31 oder einer Gruppe von Saugelementen 31 mit einem Ventil ansteuerbar ist. Bei diesen Ventilen kann es sich um reine mechanische Ventile handeln, also sogenannte Passivventile. Solche Passivventile werden allein durch eine Luftströmung, wie beispielsweise durch das Anlegen eines Vakuums, geschalten. Alternativ kann das Ventil auch ein ansteuerbares, insbesondere elektrisch ansteuerbares, Ventil, wie beispielsweise ein Magnetventil, sein. Auch kann bei dieser Ausführungsform jedem Saugelement 31 ein Ventil zugeordnet sein oder ein Ventil eine Gruppe von Saugelementen 31 gemeinsam ansteuern. Zur Ansteuerung solcher steuerbaren Ventile, insbesondere Magnetventile, ist eine nicht näher dargestellte elektrische Steuerungseinrichtung vorgesehen.

Das Saugelement 31 kann als ein aus elastischem Kunststoff bestehender Balg beziehungsweise Faltenbalg ausgebildet sein. Die Saugplatte 33 ist mit einer Schlauchleitung mit einer Vakuumpumpe verbunden. Zur einzelnen Ansteuerung der Saugelemente 31 werden die Ventile angesteuert. Die Anzahl der Vakuumsauger 35 sowie die Größe der Saugelemente 31 als auch deren Anordnung in Zeilen und Spalten und einem sonstigen Raster ist beliebig und kann an die jeweilige Handhabungsaufgabe angepasst sein, auch können im Durchmesser unterschiedlich große Saugelemente 31 an einer Saugplatte 33 innerhalb eines oder mehrerer Saugerfelder 39 vorgesehen sein. Im Ausführungsbeispiel gemäß Figur 2 sind beispielsweise drei Saugerfelder 39 mit jeweils fünf Vakuumsaugern 35 angeordnet. Jedes dieser Saugerfelder 39 und wiederum jeder Vakuumsauger 35 in dem Saugerfeld 39 ist bevorzugt separat ansteuerbar.

Die Saugplatten 33 können an dem Saugrahmen 34 in Y- und/oder Z-Achse innerhalb des XYZ-Koordinatensystems, welches in Figur 1 dargestellt ist, mit zumindest einem Linearantrieb auch verfahrbar angetrieben sein.

In Figur 3 ist schematisch vergrößert ein geschlossenes Gehäuse 46 dargestellt, in welchem eine Prüfvorrichtung 42 für eine Zustandskontrolle der Vakuumsauger 35 der Greifeinrichtung 27 vorgesehen ist.

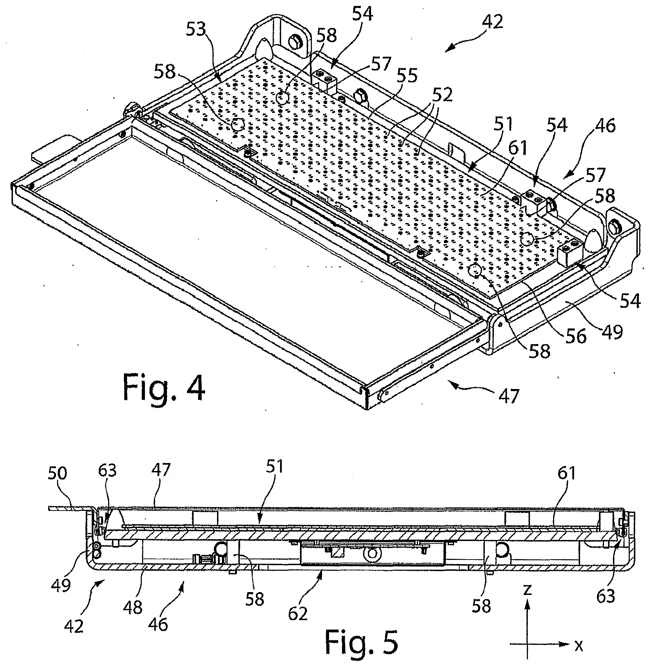

In Figur 4 ist ein Deckel 47 des Gehäuses 46 geöffnet und das Gehäuse 46 in einer Gebrauchsposition 44 dargestellt. In dieser Gebrauchsposition 44 ist eine Trägeranordnung 51 der Prüfvorrichtung 42 sichtbar. Diese Trägeranordnung 51 umfasst eine Vielzahl von Prüfeinrichtungen 52, welche zur Oberseite der Trägeranordnung 51 ausgerichtet sind. Diese Prüfeinrichtungen 52 sind in einer XY-Ebene nebeneinander und beabstandet zueinander ausgerichtet. Bevorzugt sind die Prüfeinrichtungen 52 in einem Rastermaß zueinander angeordnet, welche den Vakuumsaugern 35, insbesondere den Saugelementen 31 in einem Saugerfeld 39, entsprechen. Die Ausbildung der Prüfeinrichtungen 52 sowie deren alternative Ausführungsformen sind aus der EP 3 375 576 A1 bekannt, auf welche vollumfänglich Bezug genommen wird.

Die Trägeranordnung 51 umfasst mehrere Ausrichtelemente 54, die an zwei benachbarten beziehungsweise aneinander angrenzenden Seitenkanten 55, 56 vorgesehen sind. Im Ausführungsbeispiel ist die Trägeranordnung 51 rechteckförmig ausgebildet. Bei einer solchen Ausführungsform sind bevorzugt zwei Ausrichtelemente 54 an der längeren Seitenkante 55 und ein Ausrichtelement 54 an der kürzeren Seitenkante 56 vorgesehen. Diese Ausrichtelemente 54 dienen dazu, um das Greifelement 27 vor dem Aufsetzen der Vakuumsauger 35 auf der Trägeranordnung 51 zur Trägeranordnung 51 auszurichten. Durch die beispielsweise drei an der Trägeranordnung 51 vorgesehenen Ausrichtelemente 54 ist ein einfaches Heranführen der Greifeinrichtung 27, beispielsweise mit der Handlingseinrichtung 26, gegeben. Durch die Ausrichtelemente 54 kann eine Dreipunktanlage des Gehäuses der Greifeinrichtung 27 zur Trägeranordnung für eine hohe Positioniergenauigkeit der Vakuumsauger 35 zu den jeweiligen Prüfeinrichtungen 52 ermöglicht sein

Die Ausrichtelemente 54 sind vorzugsweise an zumindest einem Prüffeld 53 angrenzend ausgerichtet. Das oder die Prüffelder 53 umfassen eine Vielzahl der Prüfeinrichtungen 52. Das oder die Prüffelder 53 erstrecken sich innerhalb den Seitenkanten 55, 56 der Trägeranordnung 51. Vorteilhafterweise erfasst jedes Ausrichtelement 54 ein senkrecht zur XY-Ebene ausgerichteter Anschlag 57. Durch diese Anschläge 57 der Ausrichtelemente 54 kann die Greifeinrichtung 27 mit deren Gehäuse zur Anlage gebracht und ausgerichtet werden. Die Anschläge 57 können als Anschlagflächen oder Anschlagpunkte ausgebildet sein.

Die Trägeranordnung 51 ist im Gehäuse 46 schwimmend gelagert. Durch die schwimmende Lagerung der Trägeranordnung 51 im Gehäuse 46 kann die Trägeranordnung 51 zumindest in der XY-Ebene - also in der flächigen Erstreckung der Trägeranordnung 51 - zumindest geringfügig verfahrbar sein, um eine Ausgleichsbewegung durchzuführen. Dadurch ist sichergestellt, dass die Ausrichtelemente 54 der Trägeranordnung 51 beim Positionieren der Greifeinrichtung 27 oberhalb der Trägeranordnung 51 anliegend zueinander exakt positioniert sind.

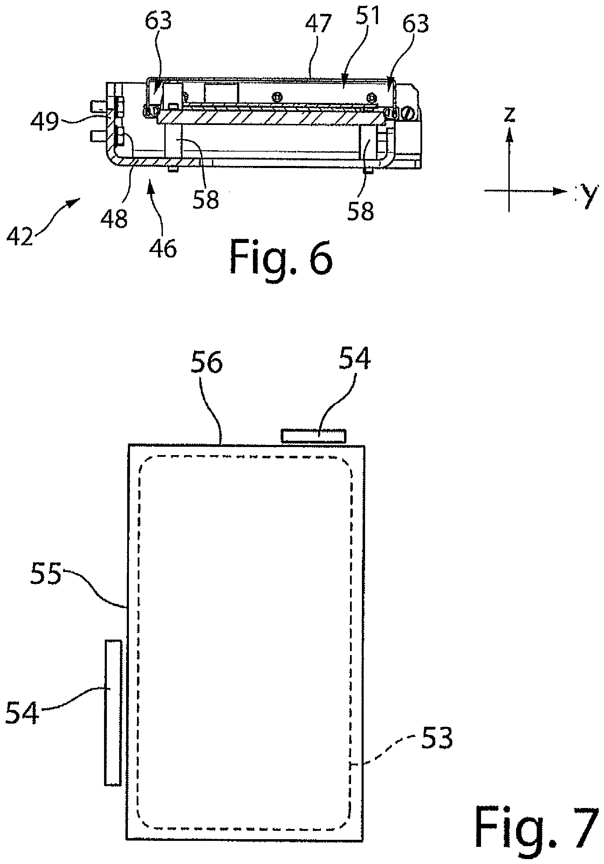

In Figur 5 ist eine schematische Schnittansicht entlang der Linie A-A in Figur 3 dargestellt. In Figur 6 ist eine schematische Schnittansicht entlang der Linie B-B in Figur 3 dargestellt. Aus diesen beiden Schnittansichten geht eine erste Ausführungsform der schwimmenden Lagerung der Trägeranordnung 51 zum Gehäuse 46 hervor. Die Trägeranordnung 51 ist durch elastisch nachgiebige Elemente 58 zum Gehäuse 46 gehalten. Die elastisch nachgiebigen Elemente 58 können beispielsweise als zylindrische Körper ausgebildet sein, welche aus einem gummielastischen oder federelastischem Material bestehen. Diese sind beispielsweise in Z-Richtung ausgerichtet und nehmen die Trägeranordnung 51 im Abstand zum Gehäuseboden 48 auf. Die Trägeranordnung 51 ist auch seitlich beabstandet zu den Gehäusewänden 49 des Gehäuses 46 positioniert. Beispielsweise können vier im Abstand zueinander angeordnete nachgiebige elastische Elemente 58 die Trägeranordnung 51 aufnehmen, wie dies aus den Figuren 5 und 6 und strichliniert in Figur 4 hervorgeht. Somit kann eine Verfahrbewegung oder Ausgleichsbewegung in X- und Y-Richtung erfolgen sowie auch eine geringfügige Verdrehbewegung der Trägeranordnung 51 um die Z-Achse.

Die Trägeranordnung 51 umfasst beispielsweise eine Trägerplatte 61, in welcher die einzelnen Prüfeinrichtungen 52 positioniert sind. Unterhalb der Trägerplatte 61 kann eine Sensorik 62 und/oder Elektronik vorgesehen sein.

In der Schnittansicht gemäß den Figuren 5 und 6 ist der Deckel 47 des Gehäuses 46 geschlossen. Vorteilhafterweise ist zwischen dem Deckel 47 und dem Gehäuse 46 zumindest eine Abdichtung in Form von Dichtelementen 63 vorgesehen. Hierbei kann es sich um mehrere Dichtelemente 63 oder ein umlaufendes Dichtelement 63 handeln, welches beispielsweise am Deckel 47 befestigt und/oder aufgesteckt ist. Diese Dichtelemente 63 liegen bevorzugt an den äußeren Seitenkanten 55, 56 der Trägeranordnung 51 an. Dadurch können die Prüfeinrichtungen 52 der Trägeranordnung 51 vor Verschmutzungen, wie beispielsweise Wasser, Öl, Staub oder dergleichen, geschützt werden.

Zum Öffnen und Schließen des Deckels 47 ist ein Angriffselement 50, wie beispielsweise eine Lasche, ausgebildet. Diese kann manuell oder auch mittels der Handlingsvorrichtung 26 zum Öffnen und Schließen des Deckels 47 betätigt werden.

Eine alternative Anordnung der Ausrichtelemente 54 ist in Figur 7 dargestellt. Dazu ist ein in der Abmessung langgestrecktes Ausrichtelement 54 an der längeren Seitenkante 55 und ein kürzeres Ausrichtelement 54 an der kürzeren Seitenkante 56 vorgesehen. Die beiden Ausrichtelemente 54 sind dabei jeweils entfernt von dem Eckbereich angeordnet, in welchem die Seitenkanten 55, 56 ineinander übergehen. Vorteilhafterweise entspricht die Länge des längeren oder langgestreckten Ausrichtelementes 54 wenigstens der 1,5-fachen Länge des kurzen Ausrichtelementes 54.

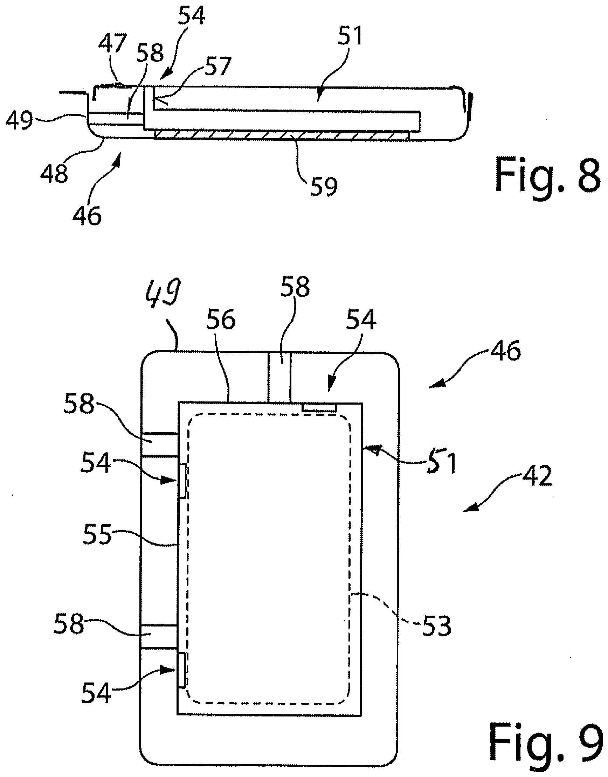

In Figur 8 ist eine Schnittansicht einer weiteren alternativen Ausführungsform der Prüfvorrichtung 42 zu Figur 3 dargestellt. Figur 9 zeigt eine schematische Schnittansicht von oben auf die alternative Ausführungsform gemäß Figur 8.

Die schwimmende Lagerung der Trägeranordnung 51 im Gehäuse 46 weicht von der Ausführungsform gemäß den Figuren 3 bis 6 ab. Beispielsweise sind die elastisch nachgiebigen Elemente 58 in der XY-Ebene vorgesehen und stützen sich an den Gehäusewänden 49 ab. Bevorzugt sind an der längeren Seitenkante 55 zwei elastisch nachgiebige Elemente 58 vorgesehen und an der kürzeren Seitenkante 56, die benachbart zur längeren Seitenkante 55 ist, beispielsweise zumindest ein elastisch nachgiebiges Element 58 vorgesehen. Die Trägeranordnung 51 kann auf dem Gehäuseboden 48 aufliegen. Vorteilhafterweise ist eine Auflagefläche in Form eines beweglichen Führungselementes 59 zwischen dem Gehäuseboden 48 in der Trägeranordnung 51 vorgesehen.

Die Ausrichtelemente 54 entsprechen bevorzugt in der Anzahl und der Ausrichtung im Wesentlichen der Positionierung der elastisch nachgiebigen Elemente 58. Auch kann eine abweichende Positionierung vorgesehen sein. Durch eine solche Ausführungsform gemäß den Figuren 8 und 9 werden dieselben Vorteile wie bei der vorbeschriebenen Ausführungsform gemäß den Figuren 3 bis 6 erzielt.

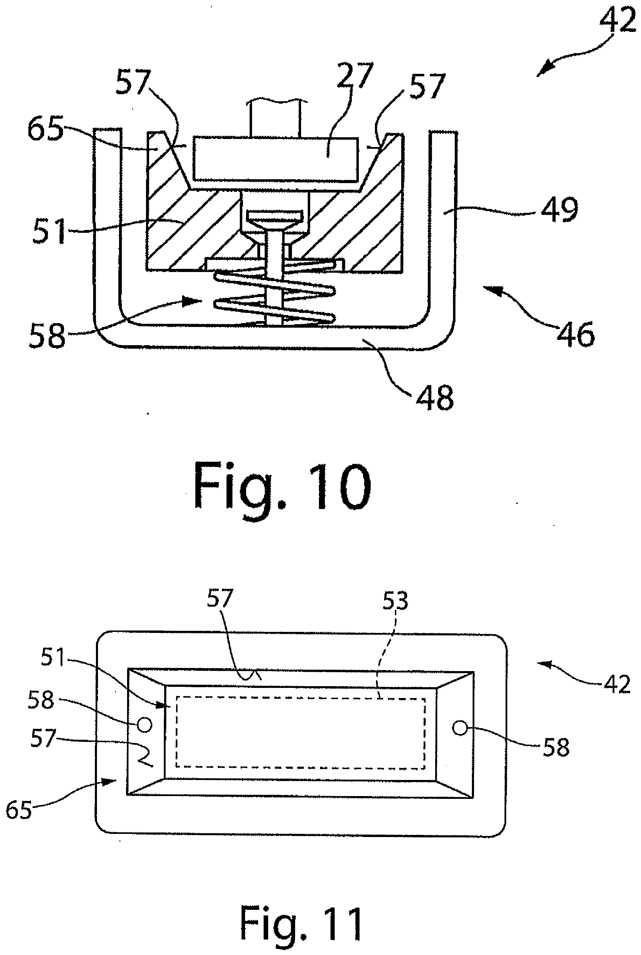

In Figur 10 ist eine schematische Schnittansicht einer alternativen der Prüfvorrichtung 42 zu Figur 3 dargestellt. Die Figur 11 zeigt eine schematische Ansicht von oben auf die alternative Ausführungsform gemäß Figur 3.

Bei dieser Ausführungsform ist die Trägeranordnung 51 wiederum schwimmend zum Gehäuse 46 gelagert. Die Trägeranordnung 51 umfasst an jeder Seitenkante 55, 56 der Trägeranordnung 51 ein Ausrichtelement 54, welches einen das oder die Prüfeinrichtungen 52 umlaufenden Ausrichtrahmen 65 bildet. An diesem Ausrichtrahmen 65 sind die Anschläge 57 als Einführschrägen ausgebildet. Dadurch wird bei einem Aufsetzen der Greifeinrichtung 27 entlang der Z-Achse auf die Trägeranordnung 51 zu einer zentrischen Positionierung der Greifeinrichtung 27 zur Trägeranordnung 51 ermöglicht.

Die Trägeranordnung 51 kann durch wenigstens zwei elastisch nachgiebige Elemente 58 zum Gehäuseboden 48 aufgenommen sein. Dadurch wird wiederum eine Verfahrbewegung der Trägeranordnung 51 innerhalb der XY-Ebene als auch in Z-Richtung ermöglicht.

Zum Durchführen der Zustandskontrolle von Vakuumsaugern 35 der Greifeinrichtung 27 wird die Greifeinrichtung 27 in die Prüfstation 41 zur Prüfvorrichtung 42 verfahren. Sofern die Prüfvorrichtung 42 ein Gehäuse 46 mit einem Deckel 47 umfasst, wird dieser geöffnet. Darauffolgend wird die Greifeinrichtung 27 mittels der Handlingsvorrichtung 26 auf die Trägeranordnung 51 zubewegt. In einer ersten Phase wird die Greifeinrichtung 27 zu den Ausrichtelementen 54 der Trägeranordnung 51 positioniert und zur Anlage gebracht. Die Greifeinrichtung 27 und Trägeran-ordnung 51 werden zueinander ausgerichtet. Anschließend erfolgt eine Verfahrbewegung entlang der Z-Achse der Greifeinrichtung 27, sodass die Vakuumsauger 35 mit einem vorbestimmten Anpressdruck auf der Trägeranordnung 51 aufliegen und positioniert sind.

Darauffolgend wird die Prüfroutine durch Ansteuerung der einzelnen Prüfeinrichtungen 52 durchgeführt. Am Ende der Prüfung der Vakuumsauger 35 kann die Greifeinrichtung 27 in Z-Richtung nach oben verfahren werden. Anschließend kann der Deckel 47, sofern dieser vorgesehen ist, geschlossen werden. Die Greifeinrichtung 27 kann anschließend weitere Handhabungstätigkeiten durchführen oder - sofern einzelne Vakuumsauger 35 bei der Prüfung beanstandet wurden - für die Instandhaltung bereitgestellt werden.

## Patentansprüche

1. Prüfvorrichtung für eine Zustandskontrolle von Vakuumsaugern (35) einer Greifeinrichtung (27),
- mit mehreren Prüfeinrichtungen (52), die in zumindest einem Prüffeld (53) zur Außenseite einer Trägeranordnung (51) ausgerichtet sind und in einer XY-Ebene der Trägeranordnung (51) nebeneinanderliegen und zueinander beabstandet sind, sodass jeweils ein Vakuumsauger (35) zur Prüfeinrichtung (52) positionierbar ist,
- **dadurch gekennzeichnet, dass** die Trägeranordnung (51) zumindest zwei Ausrichtelemente (54) aufweist, die zur lagerichtigen Ausrichtung der Greifvorrichtung (27) in der XY-Ebene zur Trägeranordnung (51) ausgebildet sind, sodass die jeweiligen Vakuumsauger (35) der Greifeinrichtung (27) zu den jeweiligen Prüfeinrichtungen (52) der Trägeranordnung (51) ausgerichtet sind.

2. Prüfvorrichtung nach Anspruch 1, **dadurch gekennzeichnet, dass** die Trägeranordnung (51) rechteckförmig oder quadratisch ausgebildet ist und dass zumindest zwei Ausrichtelemente (54) beabstandet zueinander an einer ersten Seitenkante (55) der Trägeranordnung (51) vorgesehen sind und zumindest ein Ausrichtelement (54) an einer zur ersten Seitenkante (55) benachbarten zweiten Seitenkante (56) der Trägeranordnung vorgesehen ist.

3. Prüfvorrichtung nach Anspruch 2, **dadurch gekennzeichnet, dass** die zumindest zwei Ausrichtelemente (54) jeweils zumindest einen Anschlag (57), insbesondere eine Anschlagfläche, aufweisen, die sich gegenüber der XY-Ebene der Trägeranordnung (51) in Z-Richtung erstreckt.

4. Prüfvorrichtung nach Anspruch 3, **dadurch gekennzeichnet, dass** der Anschlag (57) der zumindest zwei Ausrichtelemente (54) sich rechtwinklig zur XY-Ebene erstreckt oder in Z-Richtung gesehen eine Einführschräge für eine Aufsetzbewegung der Greifeinrichtung (27) auf die Trägeranordnung (51) bildet.

5. Prüfvorrichtung nach Anspruch 1, **dadurch gekennzeichnet, dass** an jeder Seitenkante (55, 56) der Trägeranordnung (51) zumindest ein Ausrichtelement (54) vorgesehen ist oder dass die an jeder Seitenkante (55, 56) der Trägeranordnung (51) vorgesehenen Ausrichtelemente (54) einen umlaufenden Ausrichtrahmen (65) bilden und dass die Ausrichtelemente (54) oder der Ausrichtrahmen (65) Anschläge (57) aufweisen, welche für eine selbstzentrierende Anordnung der Greifeinrichtung (27) auf die Trägeranordnung (51) ausgerichtet sind.

6. Prüfvorrichtung nach einem der vorhergehenden Ansprüche, **dadurch gekennzeichnet, dass** die Trägeranordnung (51) in einem Gehäuse (46) mit zumindest einem nachgiebig elastischen Element (58) zu einem Gehäuseboden (48) und/oder zumindest einer Gehäusewand (49) des Gehäuses (46) schwimmend gelagert ist.

7. Prüfvorrichtung nach einem der vorhergehenden Ansprüche, **dadurch gekennzeichnet, dass** die elastisch nachgiebigen Elemente (56) am Gehäuseboden (48) des Gehäuses (46) in Z-Richtung stehend ausgerichtet sind und die Trägeranordnung (51) tragen.

8. Prüfvorrichtung nach Anspruch 6, **dadurch gekennzeichnet, dass** die nachgiebig elastischen Elemente (58) an den seitlichen Gehäusewänden (49) positioniert sind und sich in der XY-Ebene erstrecken und vorzugsweise zwischen dem Gehäuseboden (48) und der Trägeranordnung (51) zumindest ein bewegliches Führungselement (59) vorgesehen ist.

9. Prüfvorrichtung nach Anspruch 6, **dadurch gekennzeichnet, dass** das Gehäuse (46) einen Deckel (47) aufweist, der in eine Gebrauchsposition (44) überführbar ist und vorzugsweise ein Angriffselement (50), insbesondere eine Lasche für eine Handlingsvorrichtung (26), oder einen Motor zur Ansteuerung der Öffnungsbewegung aufweist.

10. Prüfvorrichtung nach Anspruch 9, **dadurch gekennzeichnet, dass** eine Schnittstelle zwischen dem Gehäuse (46) und dem Deckel (47) durch zumindest ein Dichtelement (63), insbesondere durch zumindest ein im Deckel (47) angeordnetes umlaufendes Dichtelement (63), vorgesehen ist.

11. Prüfvorrichtung nach Anspruch 1, **dadurch gekennzeichnet, dass** die Prüfeinrichtungen (52) in einem Rastermaß zueinander angeordnet sind, welche den Vakuumsaugern (35), insbesondere den Saugelementen (31) in einem Saugerfeld (39), entsprechen.

12. Verfahren zur Zustandskontrolle von Vakuumsaugern (35) einer Greifeinrichtung (27) mit einer Prüfvorrichtung (42),
- bei der die Prüfvorrichtung (42) eine Trägeranordnung (51) aufweist, die zu einer Außenseite der Trägeranordnung (51) weisend eine Vielzahl von Prüfeinrichtungen (52) umfasst, die in einer XY-Ebene der Trägeranordnung (51) nebeneinanderliegen und mit Abstand zueinander ausgerichtet sind, sodass jeweils ein Vakuumsauger (35) der Greifeinrichtung (27) zur Prüfeinrichtung (52) positioniert wird,
- **dadurch gekennzeichnet,**
- **dass** die Greifeinrichtung (27) zur Trägeranordnung (51) verfahren wird,
- **dass** die Greifeinrichtung (27) vor dem Aufsetzen der Vakuumsauger (35) auf die jeweilige Prüfeinrichtung (52) der Trägeranordnung (51) zur Anlage an zumindest zwei Ausrichtelementen (54) an der Trägeranordnung (51) verfahren wird, und
- **dass** nach der Ausrichtung der Greifeinrichtung (27) in der XY-Ebene zur Trägeranordnung (51) die Vakuumsauger (35) auf die Prüfeinrichtungen (52) aufgesetzt werden.

13. Verfahren nach Anspruch 12, **dadurch gekennzeichnet, dass** die Trägeranordnung (51) in einem Gehäuse (46) durch elastisch nachgiebige Elemente (58) schwimmend gelagert aufgenommen wird.

14. Verfahren nach Anspruch 12 oder 13, **dadurch gekennzeichnet, dass** die Trägeranordnung (51) in einem mit einem Deckel (57) verschlossenen Gehäuse (46) bereitgestellt wird und vor der Durchführung der Zustandskontrolle der Deckel (47) geöffnet wird.

15. Verfahren nach einem der Ansprüche 12 bis 14, **dadurch gekennzeichnet, dass** die Greifeinrichtung (27) mit einer vordefinierten Kraft nach dem Ausrichten der Trägeranordnung (51) und der Greifeinrichtung (27) in der XY-Ebene zueinander zur sicheren Anlage auf die Prüfeinrichtung (52) der Trägeranordnung (51) zugeführt wird.
